# EUROPÄISCHE PATENTANMELDUNG

(11) **EP 2 813 416 A2**
(43) Veröffentlichungstag der Anmeldung: **17.12.2014**
(21) Anmeldenummer: 14171386.7
(22) Anmeldetag: 05.06.2014
(51) Int. Cl.: B62D 33/06, B60N 2/52, B60N 2/50, B60G 17/052

(54) **Kabinenluftfederungs-Ventileinheit und elektropneumatische Druckluftanlage**

(30) Priorität: 11.06.2013 DE 102013106041
(71) Anmelder: Haldex Brake Products GmbH, 69123 Heidelberg (DE)
(72) Erfinder: Heer, Siegfried, 69168 Wiesloch (DE)
(74) Vertreter: REHBERG HÜPPE + PARTNER

(57) **Zusammenfassung**

Die Erfindung betrifft eine Kabinenluftfederungs-Ventileinheit (4). Während derartige Kabinenluftfederungs-Ventileinheiten gemäß dem Stand der Technik über eine mechanische Niveauregelung verfügen, wird erfindungsgemäß vorgeschlagen, dass die Kabinenluftfederungs-Ventileinheit (4) über elektrisch gesteuerte Magnetventile (17, 25a, 25b, 48) verfügt, welche von einer Steuereinheit (5) angesteuert werden und die Be- und Entlüftung der Luftfederbälge (7, 9, 11, 12) vornehmen, auf welchen eine Fahrerkabine abgestützt ist. Optional kann über die Kabinenluftfederungs-Ventileinheit (4) mittels eines weiteren Magnetventils (49) die Be- und Entlüftung eines Luftfederbalgs (42) eines Fahrersitzes (43) erfolgen.

Die Erfindung findet Einsatz für Fahrerkabinen von Nutzfahrzeugen.

## Beschreibung

### TECHNISCHES GEBIET DER ERFINDUNG

Die Erfindung betrifft eine Kabinenluftfederungs-Ventileinheit und eine Druckluftanlage, welche Einsatz finden im Zusammenhang mit der federnden und niveauregulierten Abstützung einer Fahrerkabine gegenüber einem Fahrzeugrahmen bei einem Nutzfahrzeug.

### STAND DER TECHNIK

Gemäß der Internet-Seite http:/wabco-auto.com/uploads/media/Produkt_Broschüre-CALM.pdf (Stand 26.05.2013) erfolgt typischerweise eine Abstützung einer Fahrerkabine gegenüber einem Fahrzeugrahmen bei Nutzfahrzeugen über drei Kabinenluftfedermodule mit integriertem Dämpfer sowie einem weiteren Luftfeder-Dämpfer-Modul. Hierbei befinden sich zwei Kabinenluftfedermodule rechts und links an der Vorderseite der Fahrerkabine, während das dritte Kabinenluftfedermodul an der Rückseite der Fahrerkabine angeordnet und mit dem Luftfeder-Dämpfer-Modul pneumatisch verbunden ist. Eine Relativbewegung zwischen der Fahrerkabine und dem Fahrzeugrahmen wird mittels einer mechanischen Niveauregelung in jedem Kabinenluftfedermodul derart berücksichtigt, dass je nach Abweichung des Niveaus des Kabinenluftfedermoduls von einem Sollniveau innerhalb einer Ansprechschwelle ein dem Kabinenluftfedermodul zugeordneter Luftfederbalg abgesperrt wird, mit Überschreiten der Ansprechschwelle eine Entlüftung des Luftfederbalgs erfolgt sowie mit Unterschreiten der Ansprechschwelle ein Belüften des Luftfederbalgs erfolgt. Die mechanische Niveauregelung des Kabinenluftfedermoduls besitzt eine fest vorgegebene Regelcharakteristik mit vorgegebener Ansprechschwelle und zwei möglichen Durchflussraten für die Be- oder Entlüftung je nach Ausmaß des Unterschreitens oder Überschreitens der Ansprechschwelle. Die Kabinenluftfeder-module mit integrierter Niveauregelung sollen keine Justierung in der Montage und weniger Montageschritte erfordern, einen geringen Platzbedarf erfordern, eine hohe Zuverlässigkeit zur Folge haben, einen verbesserten Fahrkomfort gewährleisten und zu niedrigen Kosten führen. Um lediglich einen Nachteil einer derartigen mechanischen Niveauregelung von Kabinenluftfedermodulen zu nennen, führen diese bei im Fahrbetrieb temporär geneigter Fahrbahn sowie bei auf die Fahrerkabine wirkenden Quer- oder Längsbeschleunigungen Regelungsvorgänge durch, welche zu einem unerwünschten Verbrauch von Druckluft führen können.

DE 10 2009 046 290 B3 offenbart ein Kabinenluftfedermodul mit einer Ventileinrichtung, deren Betätigung auf mechanischem Weg erfolgt.

Aus US 6,000,703 A ist ein System zur Luftfederung einer Fahrerkabine eines Arbeitsfahrzeugs wie eines Traktors bekannt. Optional kann auch eine Luftfederung für einen innerhalb der Fahrerkabine angeordneten Fahrersitz vorgesehen sein. Zwischen der Fahrerkabine und dem Fahrzeugrahmen sind mehrere Luftfederbälge vorgesehen, wobei jedem Luftfederbalg eine Kombination aus einem hydraulischen Aktuator und einem Isolator zur Dämpfung von hochfrequenten Schwingungen parallel geschaltet ist. Dabei tragen die Luftfederbälge einen statischen Anteil des Gewichts der Fahrerkabine, während über die Kombination aus dem Aktuator und dem Isolator ein dynamischer Anteil des Gewichts der Fahrerkabine abgestützt wird. Zur Steuerung der Befüllung der Luftfederbälge ist für jeden Luftfederbalg ein elektrisch gesteuertes Magnetventil vorgesehen. Die Steuerung erfolgt dabei mittels einer Steuereinrichtung unter Berücksichtigung der erfassten auf den Luftfederbalg wirkenden statischen Last und ggf. eines an dem Luftfederbalg erfassten Drucks. Die Betätigung des Aktuators wird ebenfalls über ein elektrisch gesteuertes Magnetventil gesteuert, wobei die Steuerung mittels der Steuereinrichtung in Abhängigkeit von Bodenunebenheiten, einer Auslenkung der Fahrerkabine, einer Neigung und/oder einer Beschleunigung erfolgen kann.

Aus DE 10 2007 048 194 A1 ist ein System zur Luftfederung einer Fahrerkabine und eines Fahrzeugsitzes eines Traktors bekannt, wobei die Steuerung der Luftfederung des Fahrzeugsitzes in Abhängigkeit von der Luftfederung der Fahrerkabine erfolgt. Zur Steuerung der Be- und Entlüftung der Luftfedern ist eine Steuereinrichtung vorgesehen, die in Abhängigkeit von Signalen von Positionssensoren und Beschleunigungssensoren Regelventile steuert, um Zusatzvolumen aus Zusatzvolumentanks an die Luftfedern weiterzuleiten.

Die nicht gattungsgemäße Druckschrift DE 10 2007 023 649 A1 betrifft ein System für eine mechanischen Verstellung eines ungefederten Rücksitzes in eine Sitzstellung oder eine Beladungsstellung.

Die nicht gattungsgemäße Druckschrift DE 103 33 610 A1 betrifft eine Druckluftaufbereitungsanlage zur Bereitstellung und Trocknung von Druckluft für unterschiedliche Verbraucherkreise eines Nutzfahrzeugs. In die Druckluftaufbereitungsanlage sind Ventile einer Luftfederungsanlage integriert. Die Luftfederungsanlage dient der Abstützung des Fahrzeugchassis über Luftfederbälge gegenüber den Rädern oder Achsen.

### AUFGABE DER ERFINDUNG

Der vorliegenden Erfindung liegt die Aufgabe zugrunde, eine Druckluftanlage und eine Kabinenluftfederungs-Ventileinheit vorzuschlagen, welche hinsichtlich der Gestaltungsmöglichkeiten und der Beeinflussungsmöglichkeiten einer Regelcharakteristik und der Anwendungsmöglichkeiten erweitert sind.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die Erfindung beruht auf der Erkenntnis, dass die mechanische Niveauregelung bekannter Kabinenluftfederungen die Betriebsmöglichkeiten und Regelcharakteristika einer Niveauregelung unnötig einschränken. So sind beispielsweise bauliche Veränderungen der Kabinenluftfedermodule erforderlich, wenn eine Ansprechschwelle desselben verändert werden soll oder eine Durchflussrate für die Be- oder Entlüftung verändert werden sollen. Für unterschiedliche Einbaubedingungen sind daher u. U. unterschiedliche konstruktive Ausgestaltungen der Kabinenluftfedermodule erforderlich.

Erfindungsgemäß ist eine Kabinenluftfederungs-Ventileinheit mit elektrisch gesteuerten Magnetventilen ausgebildet ist, mittels welchen eine Be- und Entlüftung von Anschlüssen der Kabinenluftfederungs-Ventileinheit für die Luftfederbälge gesteuert wird. Je nach Steuerung (oder Regelung, im Folgenden vereinfacht "Steuerung") der Magnetventile kann vielfältigen unterschiedlichen Betriebssituationen Rechnung getragen werden, eine von der Steuerung abhängige Gestaltung von Ansprechschwellen oder Niveauschwellen für eine Veränderung einer Durchflussrate, eine Anpassung an unterschiedliche Bauvarianten der Kabinenluftfederung, der Fahrerkabine und des Fahrzeugs erfolgen u. ä., wobei im einfachsten Fall die Kabinenluftfederungs-Ventileinheit für die unterschiedlichen genannten Betriebssituationen und Einsatzfälle konstruktiv gleich ausgebildet sein kann mit Anpassung über die jeweilige Steuerung, womit im einfachsten Fall lediglich eine Anpassung der Steuersoftware erforderlich ist.

Vorzugsweise bildet die Kabinenluftfederungs-Ventileinheit eine singuläre Baueinheit, welche mit einem ein- oder mehrteiligen Gehäuse gebildet sein kann und/oder modular ausgebildet sein kann. Insbesondere ist die Kabinenluftfederungs-Ventileinheit gesondert von einer Luftaufbereitungseinrichtung ausgebildet, wobei die Luftaufbereitungseinrichtung mit einem Lufttrockner, einem Druckregler und/oder einem Mehrkreisschutzventil gebildet sein kann. In diesem Fall kann die Kabinenluftfederungs-Ventileinheit auch entfernt von dieser Druckluftaufbereitungseinrichtung angeordnet sein.

Bei den im Rahmen der Erfindung in der Kabinenluftfederungs-Ventileinheit eingesetzten Magnetventilen kann es sich um solche beliebiger Ausgestaltung handeln. Hierbei kann das Magnetventil eine beliebige Zahl von Stellungen und/oder Wegen besitzen. Beispielsweise kann das Magnetventil als Sitzventil oder Schieberventil ausgebildet sein. Möglich ist, dass das Magnetventil diskrete Betriebstellungen, beispielsweise eine Belüftungsstellung, eine Sperrstellung und/oder eine Entlüftungsstellung, besitzt. Ebenfalls möglich ist, dass dieses einen in Stufen veränderbaren Belüftungs- und/oder Entlüftungsquerschnitt besitzt. Ebenfalls denkbar ist, dass als Magnetventil ein intermittierend betriebenes Magnetventil, insbesondere ein pulsweitenmoduliertes Magnetventil Einsatz findet, welches neben einer Sperrstellung auch eine Belüftung und/oder eine Entlüftung ermöglicht mit einer belüftenden oder entlüftenden Durchflussrate, deren zeitliches Mittel von dem so genannten Duty-Cycle der Pulsweitenmodulation abhängig ist.

Durchaus möglich ist, dass die in der Kabinenluftfederungs-Ventileinheit erfindungsgemäß eingesetzten elektrisch gesteuerten Magnetventile Vorsteuerventile sind, welche einen Vorsteuerdruck erzeugen. In diesem Fall wird der von den Magnetventilen ausgesteuerte Vorsteuerdruck pneumatisch gesteuerten Ventilen zugeführt, welche für die eigentliche Be- und Entlüftung der Anschlüsse der Kabinenluftfederungs-Ventileinheit für die Luftfederbälge, die die Fahrerkabine gegenüber dem Fahrzeugrahmen abstützen, verantwortlich sind. In besonderer Ausgestaltung der Erfindung führen die elektrisch angesteuerten Magnetventile direkt (also ohne Vorsteuerung) die Be- und Entlüftung von Anschlüssen der Kabinenluftfederungs-Ventileinheit für die Luftfederbälge herbei. Hierbei umfasst die "direkte Herbeiführung" auch Ausgestaltungen, bei welchen die elektrisch angesteuerten Magnetventile in den Leitungen zu und von den Luftfederbälgen angeordnet sind, wobei durchaus möglich ist, dass die Be- und Entlüftung von einer Betriebsstellung eines weiteren pneumatischen Bauelements, insbesondere einer Ventilstellung eines weiteren Ventils, abhängig sein können. Der für diese Ausgestaltung vorgenommene Verzicht auf eine Vorsteuerung beruht auf der Erkenntnis, dass die Luftfederbälge, welche üblicherweise zur Abstützung einer Fahrerkabine eingesetzt werden, verhältnismäßig kleine Volumina, insbesondere im Bereich von 1 bis 2 Litern, besitzen. Der Erfindung zugrunde liegende Untersuchungen haben gezeigt, dass derartige Volumina auch mit direkter Ansteuerung über Magnetventile beherrschbar sind.

Grundsätzlich kann die Kabinenluftfederungs-Ventileinheit elektrische und pneumatische Anschlüsse beliebiger Anzahl und Ausgestaltung besitzen. In einer Ausgestaltung der Erfindung verfügt die Kabinenluftfederungs-Ventileinheit ausschließlich über drei Anschlüsse für Luftfederbälge, auf welchen die Fahrerkabine abgestützt ist. Dieser Ausgestaltung liegt grundsätzlich die Erkenntnis zugrunde, dass über eine "Dreipunkt-Abstützung" auf drei Luftfederbälgen eine beliebige Position und Orientierung der Fahrerkabine im Raum gegenüber dem Fahrzeugrahmen vorgegeben werden kann. Somit ist grundsätzlich die Abstützung der Fahrerkabine auch nur über drei Luftfederbälge möglich. Von dieser Ausgestaltung der Erfindung umfasst ist aber auch eine Ausgestaltung, bei welcher zwar lediglich drei Anschlüsse für Luftfederbälge an der Kabinenluftfederungs-Ventileinheit vorgesehen sind. Ein Anschluss für einen Luftfederbalg kann aber pneumatisch gekoppelt sein mit einem vierten Luftfederbalg, womit dann eine Abstützung der Fahrerkabine an vier Punkten, welche beispielsweise an den Ecken eines Rechtecks angeordnet sind, erfolgt und dann das Niveau und der Druck von zwei benachbarten Luftfederbälgen separat von der Kabinenluftfederungs-Ventileinheit über separate zugeordnete Anschlüsse gesteuert werden kann, während die Steuerung der beiden anderen Luftfederbälge unmittelbar oder mittelbar gemeinsam durch die Kabinenluftfederungs-Ventileinheit über einen gemeinsamen Anschluss erfolgt.

Für eine andere erfindungsgemäße Ausgestaltung der Kabinenluftfederungs-Ventileinheit sind an dieser vier Anschlüsse für Luftfederbälge vorhanden, welche jeweils mit einem Luftfederbalg, welcher die Fahrerkabine abstützt, verbunden sind. Für diesen Fall sind zwei Anschlüsse von in Längs- oder Querrichtung des Fahrzeugs benachbarten Luftfederbälgen über eine Drossel permanent miteinander verbunden oder in einer Schaltstellung eines Magnetventils temporär miteinander verbindbar. Die Drossel führt je nach verwendeter Drosselcharakteristik einen allmählichen Angleich des Niveaus und des Drucks der über die Drossel verbundenen Luftfederbälge herbei.

Grundsätzlich kann über beliebige Magnetventile die Be- und Entlüftung der Luftfederbälge einzeln oder in Gruppen herbeigeführt werden. Für einen besonderen Vorschlag der Erfindung ist ein Magnetventil als 3/2-Wege-Magnetventil ausgebildet, welches in einer Schaltstellung eine Entlüftung ermöglicht, während dieses in der anderen Schaltstellung eine Belüftung ermöglicht. Dieses 3/2-Wege-Magnetventil ist multifunktional einsetzbar, wenn dieses für die Be- oder Entlüftung mehrerer Anschlüsse für Luftfederbälge verantwortlich ist, wobei dieses 3/2-Wege-Magnetventil dann über Zweigleitungen mit unterschiedlichen Anschlüssen verbunden sein kann.

In den genannten Zweigleitungen können beliebige weitere pneumatische Bauelemente angeordnet sein. Für eine weitere erfindungsgemäße Ausgestaltung ist in den Zweigleitungen zwischen dem 3/2-Wege-Magnetventil und Anschlüssen für Luftfederbälge, welcher über dieses 3/2-Wege-Magnetventil be- und entlüftet werden, jeweils (nur oder auch) ein Sperrventil mit einer Durchlassstellung und einer Sperrstellung zwischengeordnet. Werden mehrere Sperrventile in ihre Durchlassstellung gesteuert, erfolgt über das 3/2-Wege-Magnetventil die gemeinsame Be- oder Entlüftung der den geöffneten Sperrventilen zugeordneten Anschlüsse und damit der zugeordneten Luftfederbälge. Auch möglich ist, dass lediglich ein Sperrventil in seine Durchlassstellung überführt wird, so dass je nach Stellung des 3/2-Wege-Magnetventils nur der diesem Sperrventil zugeordnete Anschluss und Luftfederbalg be- oder entlüftet werden, während die anderen Anschlüsse abgesperrt sind. Erreicht dann der Druck oder das Niveau in dem belüfteten oder entlüfteten Luftfederbalg das gewünschte Ausmaß (Sollniveau oder Solldruck), kann dieses Sperrventil in seine Sperrstellung überführt werden, während hieran anschließend ein anderes Sperrventil in seine Durchlassstellung überführt werden kann, womit dann über dieses je nach Stellung des 3/2-Wege-Magnetventils der zugeordnete Anschluss mit dem zugeordneten Luftfederbalg be- oder entlüftet werden kann. So kann auch sukzessive ein Be- oder Entlüften sämtlicher Luftfederbälge erfolgen. Es versteht sich, dass auch möglich ist, dass lediglich eine Teilmenge der den Anschlüssen vorgeordneten Sperrventile in die Durchlassstellung überführt wird, womit diese dann gemeinsam über das 3/2-Wege-Magnetventil beoder entlüftet werden.

Die in der Kabinenluftfederungs-Ventileinheit eingesetzten Magnetventile können insbesondere infolge einer Beaufschlagung durch eine Feder eine beliebige Ruhestellung besitzen. Für einen erfindungsgemäßen Vorschlag nehmen die Sperrventile unbestromt die Sperrstellung ein. Diese Ausgestaltung der Erfindung hat zur Folge, dass die Beibehaltung einer Druckbeaufschlagung der Luftfederbälge der Fahrerkabine keine Bestromung der Sperrventile erfordert, womit unter Umständen ein verringerter Energiebedarf verbunden ist. Auch ist eine derartige Ausgestaltung von Vorteil bei einem (temporären oder permanenten) Einbruch der elektrischen Leistungsversorgung: Mit einem Einbruch der Leistungsversorgung erfolgt die Absperrung der Luftfederbälge der Fahrerkabine, womit der einmal herbeigeführte Beaufschlagungszustand der Luftfederbälge beibehalten wird, eine grundsätzliche Fahrbereitschaft des Fahrzeugs aufrechterhalten werden kann und der Fahrer vor überraschenden Bewegungen der Fahrerkabine beim Einbruch der elektrischen Leistungsversorgung geschützt ist.

In weiterer Ausgestaltung ist in die Kabinenluftfederungs-Ventileinheit mindestens ein Magnetventil integriert, welches in zumindest einer Schaltstellung zwei Luftfederbälge miteinander verbindet. Um lediglich einige Beispiele für die Ausgestaltung dieses Magnetventils zu nennen, kann dieses eine Sperrstellung besitzen, in welcher die beiden Luftfederbälge von einander getrennt sind, eine Durchlassstellung, in welcher die Luftfederbälge miteinander verbunden sind und/oder eine Drosselstellung, in welcher die beiden Luftfederbälge über eine Drossel miteinander verbunden sind.

Die erfindungsgemäße Kabinenluftfederungs-Ventileinheit kann multifunktional eingesetzt werden, wenn in dieser auch ein elektrisch gesteuertes Magnetventil vorhanden ist, mittels welchem eine Be- und Entlüftung eines Anschlusses für einen Luftfederbalg eines Fahrersitzes gesteuert wird. In diesem Fall ist die Kabinenluftfederungs-Ventileinheit nicht nur für die Steuerung der Beaufschlagung der Luftfederbälge der Fahrerkabine zuständig, sondern auch für die Steuerung der Beaufschlagung des Luftfederbalgs des Fahrersitzes.

Auch für das für den Fahrersitz verantwortliche Magnetventil können die eingangs erläuterten Ausgestaltungen Einsatz finden. Während auch hier grundsätzlich eine Vorsteuerung über das Magnetventil möglich ist, schlägt die Erfindung in einer Weiterbildung vor, dass das elektrisch gesteuerte Magnetventil direkt die Be- und Entlüftung des Anschlusses für den Luftfederbalg eines Fahrersitzes herbeiführt.

Eine weitere Erhöhung des Integrationsgrads der Kabinenluftfederungs-Ventileinheit kann erfindungsgemäß herbeigeführt werden, wenn in dieser mindestens ein Sensor zur Erfassung eines Drucks vorhanden ist, welcher den Druck an einem Anschluss (und damit den Druck in einem Luftfederbalg der Fahrerkabine und/oder in einem Luftfederbalg des Fahrersitzes) erfasst. Auf diese Weise können extern von der Kabinenluftfederungs-Ventileinheit angeordnete Sensoren entfallen oder kann deren Zahl reduziert werden, wodurch sich eine besonders kompakte Druckluftanlage ergeben kann, ein Montage- und Leitungsaufwand reduziert werden kann u. ä.

In einer weiteren Lösung der der Erfindung zugrunde liegenden Aufgabe findet in einer elektropneumatischen Druckluftanlage eine Kabinenluftfederungs-Ventileinheit der zuvor erläuterten Art gemeinsam Einsatz mit einer elektronischen Steuereinheit. Hierbei wird das von der elektronischen Steuereinheit erzeugte Steuersignal den Magnetventilen der Kabinenluftfederungs-Ventileinheit zur Ansteuerung derselben zugeführt.

Die elektronische Steuereinheit findet Einsatz zur Steuerung einer Kabinenluftfederungs-Ventileinheit, wie diese zuvor beschrieben worden ist.

Die elektronische Steuereinheit ist mit Steuerlogik ausgestattet, welche an mindestens einem Steueranschluss für die Magnetventile ein Steuersignal erzeugt, welches zur Steuerung der Beund Entlüftung der Luftfederbälge, welche die Fahrerkabine des Nutzfahrzeugs abstützen, verwendet wird. Hierbei umfasst eine "elektronische Steuereinheit" eine singuläre Steuereinheit oder CPU, welche auch mit mehreren Prozessoren gebildet sein kann. Ebenfalls umfasst ist von einer elektronischen Steuereinheit im Sinne der vorliegenden Erfindung eine Steuereinheit, welche über zwei beabstandet voneinander angeordnete Teil-Steuereinheiten verfügt, welche über geeignete Verbindungen, insbesondere einen Datenbus, miteinander kommunizieren. Das erzeugte Steuersignal kann in einem einzigen Ausgangssignal der Steuereinheit bestehen, welches der Ansteuerung eines einzigen Magnetventils dient. Im Fall der Ansteuerung von mehreren Magnetventilen durch die Steuereinheit kann mit einem geeigneten Protokoll die Steuerinformation in einem einzigen Steuersignal für mehrere Magnetventile enthalten sein, so dass jedes Magnetventil dem Steuersignal die ihm zugeordnete Steuerinformation entnehmen kann. Ebenfalls umfasst ist eine Ausbildung, gemäß welcher mehrere Steuersignale an Steueranschlüssen der Steuereinheit erzeugt werden, welche jeweils einem zugeordneten Magnetventil zugeführt werden.

Die Steuereinheit kann beliebige weitere Eingangs- und/oder Ausgangsanschlüsse besitzen. In einer besonderen Ausgestaltung der Erfindung besitzt die elektronische Steuereinheit mindestens einen Signalanschluss für das Signal eines Sensors. Hierbei erfasst der Sensor ein Niveau der Fahrerkabine und/oder des Fahrersitzes, einen Winkel der Fahrerkabine und/oder des Fahrersitzes, eine Auslenkung eines Luftfederbalgs der Fahrerkabine und/oder des Fahrersitzes und/oder einen Druck in einem Luftfederbalg der Fahrerkabine und/oder des Fahrersitzes bzw. den Druck in einer Zuführleitung zu diesem Luftfederbalg. Die elektronische Steuereinheit ist mit Steuerlogik ausgestattet, welche dann das Steuersignal, mittels welchem das mindestens eine Magnetventil angesteuert wird, in Abhängigkeit von dem Signal an dem mindestens einen Signalanschluss bestimmt. Um lediglich ein nicht beschränkendes Beispiel zu nennen, kann für den Fall, dass ein Niveau der Fahrerkabine oder des Fahrersitzes oder ein Druck in einem Luftfederbalg der Fahrerkabine und/oder des Fahrersitzes niedriger ist als ein Sollniveau oder ein Solldruck, durch die Steuerlogik der elektronischen Steuereinheit ein Steuersignal erzeugt werden, welches eine Druckbeaufschlagung in einem Luftfederbalg herbeiführt, welche das Istniveau oder den Istdruck in Richtung des Sollniveaus oder Solldrucks verändert.

Durchaus möglich ist, dass die elektronische Steuereinheit ausschließlich ein Steuersignal für Magnetventile erzeugt, welche die Be- und/oder Entlüftung der Luftfederbälge, die der Fahrerkabine zugeordnet sind, herbeiführen. In weiterer Ausgestaltung der Erfindung besitzt die elektronische Steuereinheit auch Steuerlogik, welche an einem oder dem Steueranschluss ein Steuersignal zum Be- und Entlüften eines Luftfederbalgs eines Fahrersitzes erzeugt, so dass in diesem Fall die elektronische Steuereinheit multifunktional ist.

Während gemäß dem Stand der Technik die Steuerung der Druckbeaufschlagung eines Luftfederbalgs eines Fahrersitzes unabhängig war von der Druckbeaufschlagung der Luftfederbälge der Fahrerkabine, schlägt die Erfindung in weiterer Ausgestaltung vor, dass die elektronische Steuereinheit mit Steuerlogik ausgestattet ist, welche das Steuersignal für die Be- und Entlüftung eines Luftfederbalgs eines Fahrersitzes in Abhängigkeit von dem Steuersignal für das Be- und Entlüften der Luftfederbälge der Fahrerkabine ermittelt (oder in umgekehrter Abhängigkeit ermittelt). Um lediglich ein, die Erfindung nicht beschränkendes Beispiel zu nennen, kann für den Fall, dass eine Entlüftung der Luftfederbälge der Fahrerkabine derart erfolgt, dass letztendlich das Niveau der Fahrerkabine angehoben wird, eine entsprechende Absenkung des Niveaus des Luftfederbalgs des Fahrersitzes erfolgen, so dass letztendlich der Fahrer dieselbe Höhe über der Fahrbahn beibehält.

Gemäß einem weiteren Vorschlag der Erfindung ist die elektronische Steuereinheit mit Steuerlogik ausgestattet, welche bei Erkennung einer besonderen Betriebssituation ein Betriebssituations-Signal erzeugt oder ein extern bereitgestelltes Betriebssituations-Signal verarbeiten kann. Liegt ein derartiges Betriebssituations-Signal vor, führt die Steuerlogik über ein entsprechendes Steuersignal in einem für den Fahrer spürbaren Ausmaß eine Be- und Entlüftung mindestens eines Luftfederbalgs einer Fahrerkabine und/oder eines Luftfederbalgs eines Fahrersitzes herbei, womit der Fahrer über das Vorliegen der mit dem Betriebssituations-Signal korrelierenden Betriebssituation informiert wird. Um hier ein nicht beschränkendes Beispiel zu nennen, kann das Betriebssituations-Signal ein Gefahrensignal sein. Wird beispielsweise erkannt, dass der Fahrer die Spur der Fahrbahn verlässt (insbesondere wegen einer verringerten Aufmerksamkeit des Fahrers infolge einer Ermüdung), so erkennt die Steuereinheit ein entsprechendes Gefahrensignal, welches von der Steuereinheit selbst aus Betriebsgrößen abgeleitet wird oder über eine externe Steuereinheit erzeugt wird und bereitgestellt wird. Die spürbare Be- und/oder Entlüftung signalisiert dann dem Fahrer, dass die genannte Gefahrensituation vorliegt. Beispielsweise kann auch eine oszillierende Be- und/oder Entlüftung erfolgen, welche zu einer vibrierenden oder schwingenden Bewegung der Fahrerkabine oder des Fahrersitzes führt, womit der Fahrer alarmiert (und schlimmstenfalls aufgeweckt) wird. Auch möglich ist, dass eine stoßartige Be- und/oder Entlüftung des Luftfederbalgs der Fahrerkabine oder des Fahrersitzes erfolgt was ebenfalls gut für den Fahrer spürbar ist.

Für eine weitere Ausgestaltung der Erfindung erfüllt die elektronische Steuereinheit eine weitere Funktion. In diesem Fall ist die elektronische Steuereinheit mit Steuerlogik ausgestattet, welche ein Steuersignal für einen Aktor zur Verstellung des Fahrersitzes erzeugt. Hierbei kann der Aktor für eine beliebige Verstellung, beispielsweise eine Verstellung der Neigung des gesamten Fahrersitzes, eine Verstellung einer Rückenlehne, eine Verstellung einer Kopfstütze, eine Verstellung der Höhe des Fahrersitzes, eine Verstellung einer Beinauflage u. ä. verantwortlich sein, wobei auch Steuersignale für mehrere Verstellungen unterschiedlicher Freiheitsgrade des Fahrersitzes erzeugt werden können. Bei dem mit dem Steuersignal beaufschlagten Aktor handelt es sich beispielsweise um einen elektrischen Stellmotor. Möglich ist in diesem Zusammenhang auch, dass der Steuereinheit auch ein Wunsch des Fahrers nach Verstellung des Fahrersitzes über ein Eingangssignal zugeführt werden kann, welchen die Steuereinheit dann durch Anpassung des Steuersignals berücksichtigt. Hierbei kann der Wunsch des Fahrers über ein Potentiometer, einen Schalter, einen Drehknopf u. ä. erfasst und über eine elektrische Leitung oder einen Datenbus der Steuereinheit bereitgestellt werden.

Eine weitere Ausgestaltung der Erfindung widmet sich der Besonderheit, dass möglicherweise unterschiedliche Benutzer oder Fahrer des Fahrzeugs unterschiedliche Druckbeaufschlagungen der Luftfederbälge der Fahrerkabine und/oder des Fahrersitzes und/oder Verstellungen des Fahrersitzes erfordern. Diesem Bedürfnis trägt die Erfindung Rechnung, indem die elektronische Steuereinheit mit Steuerlogik ausgestattet sein kann, welche eine Identifizierung eines Benutzers ermöglicht. Das von der Steuerlogik der Steuereinheit erzeugte Steuersignal für mindestens einen Luftfederbalg einer Fahrerkabine, einen Luftfederbalg eines Fahrersitzes und/oder einen Aktor zur Verstellung des Fahrersitzes kann dann abhängig sein von der Identifizierung des Benutzers.

So kann beispielsweise für einen identifizierten Benutzer mit einem größeren Gewicht ein Steuersignal erzeugt werden, welches zu einer erhöhten Druckbeaufschlagung des Luftfederbalgs der Fahrerkabine und/oder des Luftfederbalgs des Fahrersitzes führt. Ebenfalls möglich ist, dass für unterschiedliche identifizierte Benutzer automatisiert durch die Steuerlogik der Steuereinheit unterschiedliche Verstellungen des Fahrersitzes vorgenommen werden, welche insbesondere der Größe des jeweiligen Benutzers Rechnung tragen. Hierbei kann eine einmal von einem Benutzer vorgenommene Einstellung des Fahrersitzes in einer Speichereinheit der Steuereinheit abgespeichert werden, so dass diese abgespeicherte Einstellung mit Identifizierung des Benutzers über den Aktor automatisiert wieder hergestellt werden kann.

Die Möglichkeiten für eine Identifizierung des Benutzers sind beliebig. Um lediglich einige Beispiele zu nennen, kann die Identifizierung des Benutzers durch eine externe Einrichtung, beispielsweise ein Mobiltelefon oder durch Fahrerassistenzsysteme mittels Gesichtsfelderkennung erfolgen. In besonderer Ausgestaltung der Erfindung erfolgt die Identifizierung anhand eines Fahrerschlüssels, so dass für unterschiedliche Fahrer das Fahrzeug mit unterschiedlichen Fahrerschlüsseln betrieben werden kann, die eine jeweilige Identifizierung des Fahrers erlauben. Hierbei kann es sich um einen mechanischen Fahrerschlüssel, einen Infrarot-Fahrerschlüssel, eine Fernbedienung u. ä. handeln. Alternativ oder zusätzlich möglich ist, dass der Fahrer eine Identifikation oder Kennzeichnung eingibt, beispielsweise eine PIN, einen Schalter "Fahrer 1", "Fahrer 2", "Fahrer 3", ... betätigt u. ä. Auf gesonderte Eingaben oder Maßnahmen des Fahrers gänzlich verzichtet werden kann unter Umständen, wenn eine Identifizierung des Fahrers auf Grundlage des Gewichts des Fahrers erfolgt, wobei dieses auch auf Grundlage einer Erfassung des Niveaus des Fahrersitzes oder einer Erfassung des Drucks des Luftfederbalgs des Fahrersitzes erfolgen kann.

Eine weitere Funktion kann die elektronische Steuereinheit übernehmen, wenn diese mit Steuerlogik ausgestattet ist, die auch ein Steuersignal für mindestens einen die Fahrerkabine abstützenden Dämpfer ermittelt. Auf diese Weise kann unter Umständen über die Steuereinheit eine Dämpfungscharakteristik ausgewählt werden. Um lediglich einige nicht beschränkende Beispiele zu nennen, kann auch die Dämpfungscharakteristik je nach identifiziertem Fahrer gewählt werden. Ebenfalls möglich ist die automatische Anpassung der Dämpfungscharakteristik an unterschiedliche Betriebs- oder Fahrzustände.

Eingangs erwähnt wurde, dass für eine mechanische Niveauregelung eines Kabinenluftfedermoduls ein unerwünschter Druckluftverbrauch auch auftritt, wenn sich das Fahrzeug temporär über eine geneigte Fahrbahn bewegt, das Fahrzeug in Längsrichtung beschleunigt wird (worunter auch eine Abbremsung verstanden wird) oder das Fahrzeug in einer Kurve eine Querbeschleunigung erfährt. Ein derartiger unerwünschter Druckluftverbrauch kann erfindungsgemäß verringert oder gänzlich vermieden werden, wenn der Steuereinheit ein Beschleunigungssignal des Fahrzeugs oder der Fahrerkabine zugeführt wird. In diesem Fall ist die Steuereinheit mit Steuerlogik ausgestattet, welche das Steuersignal für die Be- und Entlüftung der Luftfederbälge der Fahrerkabine und/oder für die Be- und Entlüftung des Luftfederbalgs des Fahrersitzes in Abhängigkeit von dem Beschleunigungssignal ermittelt. Im Extremfall kann für das Vorliegen eines entsprechenden Beschleunigungssignals die Leitungsverbindung zu den genannten Luftfederbälgen abgesperrt werden oder ein Durchlassquerschnitt von zugeordneten Magnetventilen zumindest reduziert werden.

Grundsätzlich können in der elektropneumatischen Druckluftanlage die Steuereinheit einerseits und die Kabinenluftfederungs-Ventileinheit beliebig konstruktiv ausgestaltet sein. Hierbei können diese als separate Baueinheiten ausgebildet sein, die über elektrische und/oder pneumatische Leitungen miteinander verbunden sind. Für eine besondere Ausgestaltung der Erfindung sind die elektronische Steuereinheit und die Kabinenluftfederungs-Ventileinheit gemeinsam als eine singuläre Baueinheit ausgebildet, also in ein gemeinsames ein- oder mehrteiliges Gehäuse integriert. In alternativer Ausgestaltung bilden die elektronische Steuereinheit und die Kabinenluftfederungs-Ventileinheit eine modulare Baueinheit, wobei einzelne Module der Baueinheit aneinander ansetzbar, aneinander anflanschbar oder gemeinsam in ein Modulgehäuse einsetzbar sind. Vorzugsweise werden mit dem Anflanschen der Module aneinander auch elektrische oder pneumatische Leitungsverbindungen hergestellt, welche über geeignete Schnittstellen im Flanschbereich gebildet werden.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Steuersignal die Rede ist, ist dies so zu verstehen, dass genau ein Steuersignal, zwei Steuersignale oder mehr Steuersignale vorhanden sind. Diese Merkmale können durch andere Merkmale ergänzt werden oder die einzigen Merkmale sein, aus denen das jeweilige Erzeugnis besteht.

### KURZBESCHREIBUNG DER FIGUREN

Im Folgenden wird die Erfindung anhand in den Figuren dargestellter bevorzugter Ausführungsbeispiele weiter erläutert und beschrieben. **Fig. 1 bis 6** zeigen dabei unterschiedliche Ausgestaltungen von Druckluftanlagen mit Steuergerät, Kabinenluftfederungs-Ventileinheit und Luftfederbälgen zur Abstützung einer Fahrerkabine gegenüber einem Fahrzeugrahmen, wobei in **Fig. 4** **und** **5** ergänzend ein Luftfederbalg zur Abstützung eines Fahrzeugsitzes gegenüber der Fahrerkabine dargestellt ist.

### FIGURENBESCHREIBUNG

In den Figuren sind elektrische Leitungen gestrichelt dargestellt, während pneumatische Leitungen mit durchgezogenen Linien dargestellt sind. In den Figuren sind darüber hinaus Baueinheiten oder Module mit strichpunktierten Umrandungen gekennzeichnet, wobei derartige Module separat voneinander ausgebildet sein können und über pneumatische und/oder elektrische Leitungen miteinander kommunizieren können, aneinander angeflanscht sein können oder in ein gemeinsames Gehäuse integriert sein können.

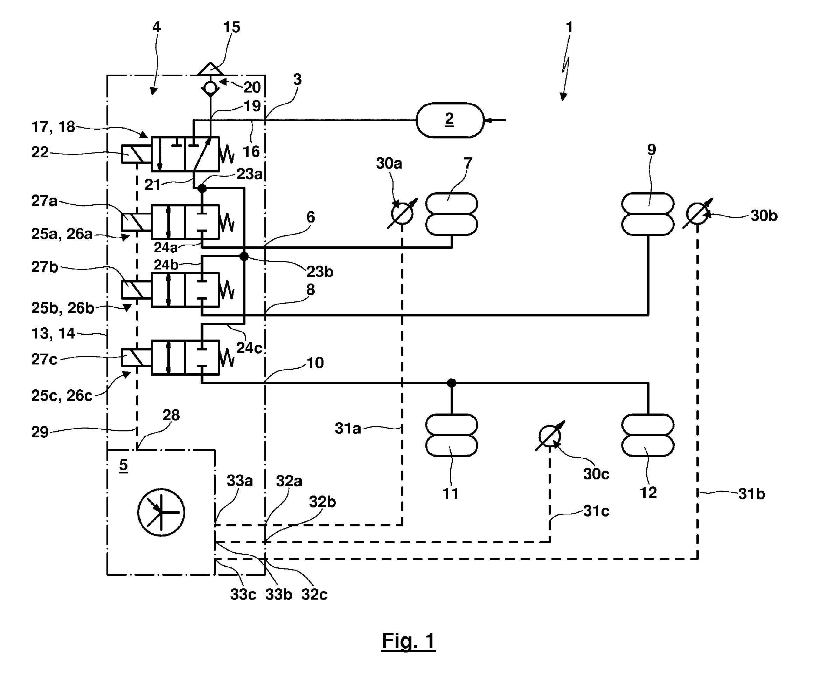

**Fig. 1** zeigt schematisch eine Druckluftanlage 1. Diese verfügt über einen auf nicht dargestellte Weise mit Druckluft versorgten Behälter 2. Beispielsweise kann der Behälter 2 an eine Druckluftaufbereitungseinrichtung mit einem Mehrkreisschutzventil angeschlossen sein, welche wiederum von einem Kompressor mit Druckluft versorgt wird. Die Druckluft gelangt von dem Behälter 2 zu einem Versorgungsanschluss 3 einer Kabinenluftfederungs-Ventileinheit 4, welche über eine Steuereinheit 5 gesteuert ist. Gemäß dem in Fig. 1 dargestellten Ausführungsbeispiel ist die Steuereinheit 5 in die Kabinenluftfederungs-Ventileinheit 4 integriert oder an diese angeflanscht. Die Kabinenluftfederungs-Ventileinheit 4 ist über einen Anschluss 6 mit einem Luftfederbalg 7, einen Anschluss 8 mit einem Luftfederbalg 9 und einen Anschluss 10 mit Luftfederbälgen 11, 12 verbunden. Die Luftfederbälge 7, 9, 11, 12 stützten sich jeweils mit einem Federfußpunkt an einem Fahrzeugrahmen eines Nutzfahrzeugs ab, während auf diesen an den anderen Federfußpunkten eine Fahrerkabine (nicht dargestellt) aufliegt und damit abgestützt ist. Beispielsweise handelt es sich bei dem Luftfederbalg 7 um einen vorderen linken Luftfederbalg, während der Luftfederbalg 9 ein vorderer rechter Luftfederbalg ist und die Luftfederbälge 11, 12 rechts und links hinten unter der Fahrerkabine angeordnet sind.

Die Kabinenluftfederungs-Ventileinheit 4 ist mit einem insbesondere mehrteiligen Gehäuse oder modularen Gehäuse 13 gebildet, womit eine Baueinheit 14 gebildet ist. Die Kabinenluftfederungs-Ventileinheit 4 verfügt über eine Entlüftung 15.

In der Kabinenluftfederungs-Ventileinheit 4 ist der Versorgungsanschluss 3 über eine Versorgungsleitung 16 mit einem zentralen Be- und Entlüftungsventil in Ausbildung als Magnetventil 17, hier in Ausbildung als 3/2-Wege-Magnetventil 18, verbunden. Weitere Anschlüsse des 3/2-Wege-Magnetventils 18 sind über eine Entlüftungsleitung 19 mit darin angeordnetem Rückschlagventil 20 mit der Entlüftung 15 sowie einer Zentralleitung 21 verbunden. Federbelastet nimmt das 3/2-Wege-Magnetventil die in Fig. 1 wirksame Entlüftungsstellung ein, in welcher dieses die Zentralleitung 21 mit der Entlüftung 15 verbindet, während die Versorgungsleitung 16 abgesperrt ist. Mit elektrischer Bestromung eines Steueranschlusses 22 kann das 3/2-Wege-Magnetventil 18 in seine Belüftungsstellung umgesteuert werden, in welcher dieses die Zentralleitung 21 über die Versorgungsleitung 16 mit dem Versorgungsanschluss 3 (und damit mit dem Behälter 2) verbindet, während die Entlüftungsleitung abgesperrt ist.

Über Verzweigungen 23a, 23b verzweigt die Zentralleitung 21 zu Zweigleitungen 24a, 24b, 24c, welche jeweils über ein Magnetventil 25a, 25b, 25c, hier in Ausbildung als Sperrventil 26a, 26b, 26c oder 2/2-Wege-Magnetventil, zu einem zugeordneten Anschluss 6, 8, 10 führen. Für das dargestellte Ausführungsbeispiel nehmen die Sperrventile 26 jeweils federbeaufschlagt ihre Sperrstellung ein, in welcher die zugeordnete Zweigleitung 24 abgesperrt ist. Durch elektrische Ansteuerung von Steueranschlüssen 27a, 27b, 27c können die Sperrventile 26a, 26b, 26c in ihre Durchlassstellung überführt werden.

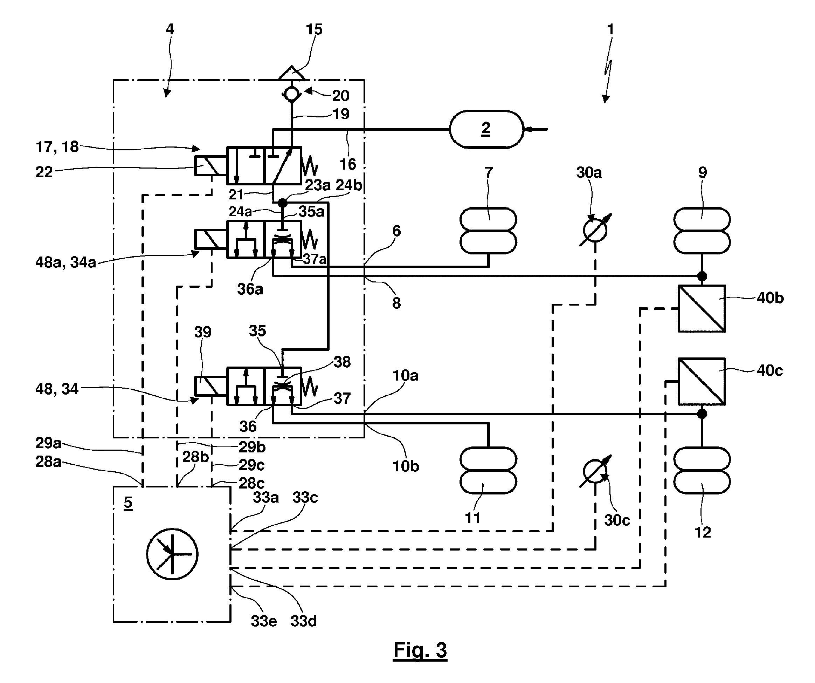

Die elektronische Steuereinheit 5 ist mit Steuerlogik ausgestattet, welche an einem Steueranschluss 28 der Steuereinheit 5 ein Steuersignal erzeugt, welches über eine Steuerleitung 29 den Steueranschlüssen 27a, 27b, 27c der Sperrventile 26a, 26b, 26c sowie dem Steueranschluss 22 des 3/2-Wege-Magnetventils 18 zugeführt wird. Für den Fachmann ist ersichtlich, dass abweichend zu der Darstellung gemäß Fig. 1 auch möglich ist, dass die Ansteuerung der Magnetventile 17, 25 über mehrere separate Steueranschlüsse 28 der Steuereinheit 5 und mehrere separate Steuerleitungen 29 erfolgen kann (vgl. hierzu auch Fig. 3).

Gemäß Fig. 1 verfügt die Druckluftanlage 1 über Sensoren 30a, 30b, 30c, welche das Niveau der Luftfederbälge 7, 9, 11, 12 bzw. den Abstand der Fahrerkabine von dem Fahrzeugrahmen im Bereich der Luftfederbälge, 7, 9, 11, 12 erfassen. Hierbei ist der Sensor 30a dem Luftfederbalg 7 (vorne links) und der Sensor 30b dem Luftfederbalg 9 (vorne rechts) zugeordnet. Mit dem Sensor 30c wird ein gemeinsames oder gemitteltes Niveau im Bereich der Luftfederbälge 11, 12 ermittelt, insbesondere mittig auf der Hinterseite der Fahrerkabine. Das Ausgangssignal der Sensoren 30a, 30b, 30c wird über Signalleitungen 31 a, 31 b, 31 c Signalanschlüssen 32a, 32b, 32c der Kabinenluftfederungs-Ventileinheit 4 und innerhalb derselben über Signalanschlüsse 33a, 33b, 33c der Steuereinheit 5 zur weiteren Verarbeitung und zur Berücksichtigung bei der Bestimmung des Steuersignals an dem Steueranschluss 28 zugeführt.

Die Funktionsweise der Druckluftanlage 1 ist wie folgt:
Je nach Betriebsstellung des 3/2-Wege-Magnetventils 18 kann die Zentralleitung 21 belüftet oder entlüftet werden. Wird eines der Magnetventile 25 oder werden mehrere Magnetventile 25 in die Durchlassstellung durch die Steuereinheit 5 gesteuert, wird die zugeordnete Zweigleitung 24 mit der Zentralleitung 21 verbunden, so dass diese je nach Schaltstellung des 3/2-Wege-Magnetventils 18 be- oder entlüftet werden kann. Letztendlich kann auf diese Weise eine gezielte einzelne Be- oder Entlüftung der Anschlüsse 6, 8, 10 und damit der Luftfederbälge 7, 9, 11, 12 erfolgen, wobei auch die gemeinsame Be- oder Entlüftung von Gruppen von Anschlüssen 6, 8, 10 möglich ist. Dies soll an folgendem Beispiel erläutert werden: Übermittelt der Fahrer über ein geeignetes Betätigungsorgan einen Wunsch nach Anhebung der vorderen linken Seite der Fahrerkabine, also einer Zufuhr von Druckluft zu dem Luftfederbalg 7, oder ermittelt die Steuereinheit 5 automatisch auf Grundlage der Signale der Sensoren 30 an den Signalanschlüssen 33, dass eine Erhöhung des Drucks in dem Luftfederbalg 7 erforderlich ist (insbesondere um ein Soll-Niveau zu halten), so erzeugt die Steuereinheit 5 an dem Steueranschluss 28 und in der Steuerleitung 29 ein Steuersignal derart, dass die Sperrventile 26b, 26c in ihrer Sperrstellung verbleiben, während das Sperrventil 26a in die Durchlassstellung gesteuert wird. Gleichzeitig wird das 3/2-Wege-Magnetventil 18 in die (in Fig. 1 nicht wirksame) Durchlassstellung gesteuert. Somit kann Druckluft aus dem Behälter 2 über den Versorgungsanschluss 3, die Versorgungsleitung 16, das 3/2-Wege-Magnetventil 18, die Zentralleitung 21, die Zweigleitung 24a mit darin angeordnetem Sperrventil 26a in der Durchlassstellung und den Anschluss 6 zu dem Luftfederbalg 7 strömen. Da sich die Sperrventile 26b, 26c in ihrer Sperrstellung befinden, ändert sich die Beaufschlagung der Luftfederbälge 9, 11, 12 mit Druckluft nicht. Der Sensor 30a (und auch die weiteren Sensoren 30) erfassen die Veränderung des Niveaus und/oder die Veränderung einer räumlichen Orientierung der Fahrerkabine. Wird durch den Sensor 30a das Erreichen eines Sollniveaus des Luftfederbalgs 7 erkannt, steuert die elektronische Steuereinheit 5 über ein verändertes Steuersignal an dem Steueranschluss 28 das Sperrventil 26a wieder in die Sperrstellung, womit die Belüftung des Luftfederbalgs 7 beendet ist. Das Entsprechende gilt, wenn der Luftfederbalg 7 entlüftet werden soll, wobei in diesem Fall das 3/2-Wege-Magnetventil durch die Steuereinheit 5 in die Entlüftungsstellung gesteuert wird. Eine gemeinsame Be- oder Entlüftung mehrerer Luftfederbälge, insbesondere einer Teilgruppe derselben, ist möglich, wenn nicht lediglich ein Sperrventil 26a in die Durchlassstellung gesteuert wird, sondern mehrere Sperrventile. Möglich ist ebenfalls, dass sukzessive mehrere Be- und Entlüftungsvorgänge ausgeführt werden, indem sukzessive unterschiedliche Sperrventile 26a, 26b, 26c in die Durchlassstellung überführt werden. Beispielsweise kann nach der zuvor erläuterten Belüftung des Luftfederbalgs 7 eine Entlüftung des Luftfederbalgs 9 erfolgen, indem das 3/2-Wege-Magnetventil 18 in die Entlüftungsstellung gesteuert wird, während gleichzeitig das Sperrventil 26b in die Durchlassstellung überführt wird und sich die Sperrventile 26a, 26c in ihrer Sperrstellung befinden. Auf diese Weise kann durch Belüftung des Luftfederbalgs 7 und Entlüftung des Luftfederbalgs 9 in einer Sequenz eine Veränderung der Neigung der Fahrerkabine gegenüber dem Fahrzeugrahmen in Fahrzeugquerrichtung erfolgen.

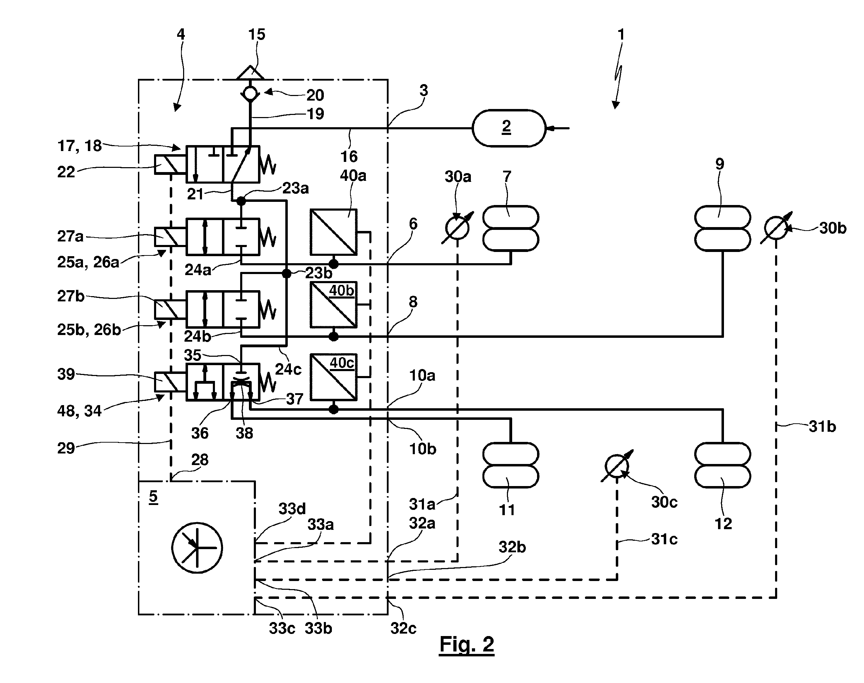

Für das in **Fig. 2** dargestellte Ausführungsbeispiel gilt grundsätzlich das zu Fig. 1 Gesagte. Allerdings ist in der Zweigleitung 24c hier nicht ein Sperrventil 26c dem einen Anschluss 10 gemäß Fig. 1 vorgeordnet. Vielmehr findet hier ein Magnetventil 48 in Ausgestaltung als 3/2-Wege-Magnetventil 34 Einsatz. Dieses verfügt über einen eingangsseitigen Anschluss 35 sowie zwei ausgangsseitige Anschlüsse 36, 37. In der federbeaufschlagten Sperrstellung, welche in Fig. 2 wirksam ist, sind die ausgangsseitigen Anschlüsse 36, 37 gegenüber dem eingangsseitigen Anschluss 35 gesperrt. In dieser Sperrstellung sind die beiden Anschlüsse 36, 37 über eine Drossel 38 des 3/2-Wege-Magnetventils 34 miteinander verbunden. Mit elektrischer Ansteuerung eines Steueranschlusses 39 des 3/2-Wege-Magnetventils 34 wird dieses in eine Durchlassstellung überführt, in welcher ohne Drossel 38 die Anschlüsse 35, 36, 37 miteinander verbunden sind, so dass die Anschlüsse 36, 37, über die Zentralleitung 21 je nach Stellung des 3/2-Wege-Magnetventils 18 be- oder entlüftet werden können. Gemäß Fig. 2 sind die Luftfederbälge 11, 12 abweichend zu Fig. 1 nicht mit einem gemeinsamen Anschluss 10 der Kabinenluftfederungs-Ventileinheit 4 verbunden. Vielmehr ist jedem Luftfederbalg 11, 12 ein Anschluss 10a, 10b zugeordnet, wobei der Anschluss 10a mit dem Anschluss 37 des 3/2-Wege-Magnetventils 34 verbunden ist, während der Anschluss 10b mit dem Anschluss 36 verbunden ist. In der Sperrstellung des 3/2-Wege-Magnetventils 34 sind somit die Luftfederbälge 11, 12 über die Drossel 38 miteinander pneumatisch gekoppelt, während in der Durchlassstellung des 3/2-Wege-Magnetventils die Luftfederbälge 11, 12 gemeinsam be- oder entlüftet werden können.

Gemäß Fig. 2 sind in die Kabinenluftfederungs-Ventileinheit 4 drei Sensoren 40a, 40b, 40c integriert, welche den Druck in einer Leitung zwischen dem Sperrventil 26 und dem jeweils zugeordneten Anschluss 6, 8, 10a erfassen. Die Ausgangssignale der Sensoren 40a, 50b, 40c, welche letztendlich den Drücken in den Luftfederbälgen 7, 9, 12 entsprechen, werden mit innerhalb der Kabinenluftfederungs-Ventileinheit 4 verlaufenden Signalleitungen einem Signalanschluss 33d der elektronischen Steuereinheit 5 zugeführt. Die Signale der Sensoren 40a, 40b, 40c werden von der Steuereinheit 5 zur Bestimmung des Steuersignals an dem Steueranschluss 28 und damit zur Ansteuerung der Magnetventile 17, 25a, 25b, 48 verwendet. Auf Grundlage der Signale der Sensoren 40 kann beispielsweise die Gesamtmasse der Fahrerkabine ermittelt werden, womit auch erfasst werden kann, wenn ein Fahrer die Fahrerkabine betritt bzw. verlässt. Möglich ist sogar, dass auf Grundlage der Signale der Sensoren ermittelt werden kann, welches Gewicht der Fahrer besitzt, womit unterschiedliche Fahrer automatisiert mittels der Steuereinheit 5 identifiziert werden können. Andererseits können die Signale der Sensoren 40 verwendet werden für die eigentliche Steuerung der Druckbeaufschlagung der Luftfederbälge 7, 9, 11, 12.

Für das in **Fig. 3** dargestellte Ausführungsbeispiel ist die Steuereinheit 5 separat von der Kabinenluftfederungs-Ventileinheit 4 ausgebildet, wobei hier die Steuereinheit 5 und die Kabinenluftfederungs-Ventileinheit 4 beabstandet voneinander angeordnet sind. Die Steuereinheit 5 und die Kabinenluftfederungs-Ventileinheit 4 sind ausschließlich über Steuerleitungen 29a, 29b, 29c miteinander verbunden. Abweichend zu den Figuren 1 und 2 wird gemäß Fig. 3 lediglich über die Sensoren 30a, 30c das Niveau an der Vorderseite der Fahrerkabine sowie an der Rückseite der Fahrerkabine erfasst, was vorzugsweise mittig zwischen den Luftfederbälgen 7, 9 bzw. den Luftfederbälgen 11, 12 erfolgt. Auch in diesem Fall wird das Ausgangssignal der Sensoren 30a, 30c über Signalanschlüsse 33a, 33c der Steuereinheit 5 zur weiteren Verarbeitung zugeführt. Für das in Fig. 3 dargestellte Ausführungsbeispiel sind der Sensor 40b zur Erfassung des Drucks in dem Luftfederbalg 9 sowie der Sensor 40c zur Erfassung des Drucks in dem Luftfederbalg 12 außerhalb der Kabinenluftfederungs-Ventileinheit 4 angeordnet, vorzugsweise unmittelbar benachbart den Luftfederbälgen 9, 12. Das Ausgangssignal der Sensoren 40b, 40c wird über Signalleitungen, die hier außerhalb der Kabinenluftfederungs-Ventileinheit 4 verlaufen, Steueranschlüssen 33d, 33e der Steuereinheit 5 zur weiteren Verarbeitung zugeführt.

Gemäß Fig. 3 verzweigt die Zentralleitung 21 bei der Verzweigung 23a lediglich auf zwei Zweigleitungen 24a, 24b. Die Zweigleitung 24b ist entsprechend Fig. 2 mit dem zugeordneten Anschluss 35 des 3/2-Wege-Magnetventils 34 verbunden, welches wie zu Fig. 2 beschrieben mit den Luftfederbälgen 11, 12 in Wechselwirkung steht. Die Sperrventile 26a, 26b gemäß Fig. 2 zur Ermöglichung einer einzelnen Be- und Entlüftung der Anschlüsse 6, 8 der Kabinenluftfederungs-Ventileinheit 4 sind in Fig. 3 entfallen. Stattdessen ist die Zweigleitung 24a mit einem Anschluss 35a an ein 3/2-Wege-Magnetventil 34a verbunden, welches entsprechend dem Magnetventil 34 gemäß Fig. 2 ausgebildet ist, weshalb hier dieselben Bezugszeichen mit dem ergänzenden Buchstaben "a" verwendet worden sind. Der Anschluss 37a des 3/2-Wege-Magnetventils 34a ist mit dem Anschluss 6 für den Luftfederbalg 7 verbunden, während der Anschluss 36a mit dem Anschluss 8 für den Luftfederbalg 9 verbunden ist. Für das Ausführungsbeispiel gemäß Fig. 3 bilden die vorderen Luftfederbälge 7, 9 eine erste Gruppe von Luftfederbälgen, welche gemeinsam über das Magnetventil 48a be- und entlüftet werden sowie in der Sperrstellung des 3/2-Wege-Magnetventils 34a über die Drossel 38a miteinander pneumatisch gekoppelt sind. Entsprechendes gilt für die zweite Gruppe der Luftfederbälge 11, 12, welche an der Hinterseite der Fahrerkabine angeordnet sind und welche über das 3/2-Wege-Magnetventil 34 gemeinsam be- oder entlüftet werden oder über eine Drossel 38 verbunden werden können.

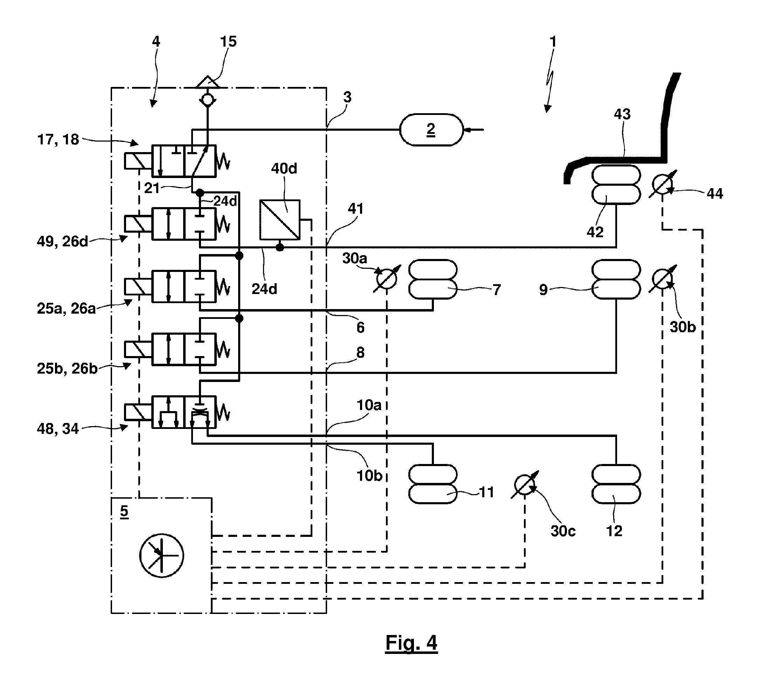

Die Druckluftanlage gemäß **Fig. 4** und deren Bestandteile ist/sind grundsätzlich entsprechend dem Ausführungsbeispiel gemäß Fig. 2 ausgebildet. Allerdings zweigt hier von der Zentralleitung 21 eine weitere Zweigleitung 24d ab, in welcher ein weiteres Magnetventil 49, hier in Ausgestaltung als Sperrventil 26d, angeordnet ist und welche zu einem Anschluss 41 der Kabinenluftfederungs-Ventileinheit 4 führt. Der Anschluss 41 ist über eine pneumatische Leitung verbunden mit einem Luftfederbalg 42, welcher sich auf der Fahrerkabine (und damit mittelbar auf den Luftfederbälgen 7, 9, 11, 12) abstützt und auf welchem wiederum ein Fahrersitz 43 abgestützt ist. Je nach Stellung des Sperrventils 26d kann der Anschluss 41 und damit auch der Luftfederbalg 42 des Fahrersitzes 43 über das 3/2-Wege-Magnetventil 18 be- oder entlüftet werden oder aber abgesperrt werden. In der Leitung zwischen dem Sperrventil 26d und dem Anschluss 41 ist ein Sensor 40d zur Erfassung eines Drucks angeordnet, dessen Ausgangssignal der Steuereinheit 5 zugeführt wird. Möglich ist, dass bei Überführung mehrerer Magnetventile 25, 48, 49 in eine Durchlassstellung über das 3/2-Wege-Magnetventil 18 gleichzeitig der Luftfederbalg 42 des Fahrersitzes 43 einerseits und mindestens ein Luftfederbalg 7, 9, 11, 12 auf welchem die Fahrerkabine abgestützt ist, be- oder entlüftet werden.

Die Höhe und/oder eine Neigung des Fahrersitzes 43 wird/werden über mindestens einen Sensor 44 erfasst, dessen Ausgangssignal ebenfalls der Steuereinheit 5 zugeführt wird.

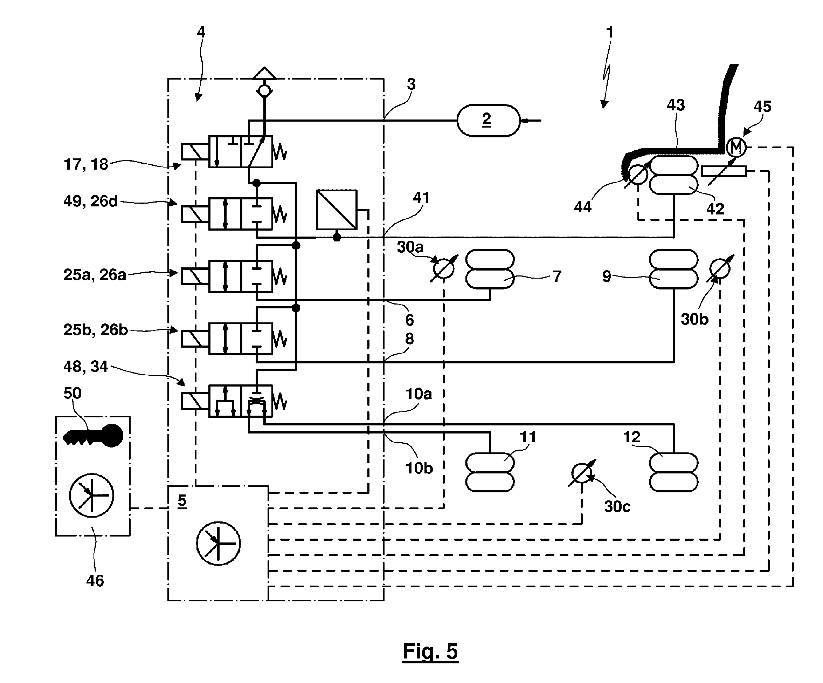

Bis auf Weiteres entspricht die Ausgestaltung gemäß **Fig. 5** dem Ausführungsbeispiel gemäß Fig. 4. Allerdings verfügt hier der Fahrersitz 43 über einen Aktor 45, über welchen automatisiert durch die Steuereinheit 5 oder entsprechend einer Vorgabe eines Wunsches des Fahrers eine Verstellung des Fahrersitzes 43 erfolgen kann. Eine Erfassung eines Fahrerwunsches entsprechend einer Betätigung eines Betätigungsorgans, eine Sensierung einer Stellung des Fahrersitzes und die Ansteuerung des Aktors 45 erfolgt hier auch durch die Steuereinheit 5.

Gemäß Fig. 5 steht die Steuereinheit 5 in Wechselwirkung mit einer weiteren Steuereinheit 46, insbesondere über ein Bussystem. Die Steuereinheit 46 identifiziert einen Benutzer oder Fahrer der Fahrerkabine und übermittelt über die Datenleitung oder das Bussystem die Identifizierung an die Steuereinheit 5. Beispielsweise erfolgt die Identifizierung des Benutzers oder Fahrers über einen Schlüssel 50. Auf Grundlage der derart in der Steuereinheit 5 verfügbaren Identifizierung des Fahrers kann die Steuereinheit 5 den Aktor 45 so ansteuern, dass der Fahrersitz 43 für den jeweiligen Fahrer automatisiert eingestellt wird. Ebenfalls möglich ist, dass, entsprechend des Gewichts des Fahrers eine automatische Einstellung des Drucks in den Luftfederbalg 42 für den Fahrersitz 43 erfolgt. Unter Umständen ebenfalls möglich ist eine Anpassung der Druckverhältnisse in den Luftfederbälgen 7, 9, 11, 12 auf Grundlage der Identifizierung des Fahrers.

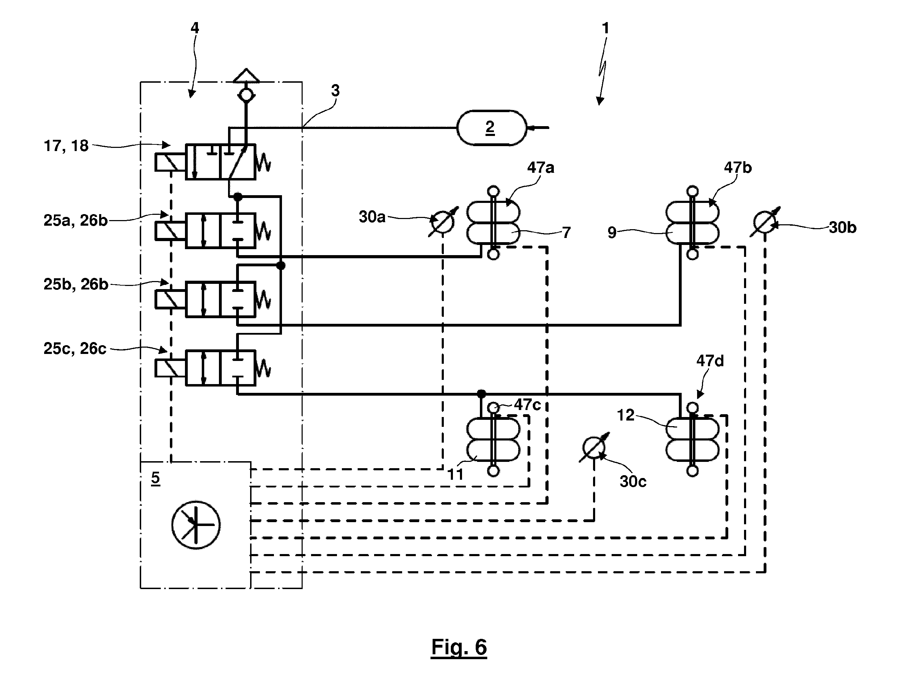

Gemäß dem Ausführungsbeispiel, welches in **Fig. 6** dargestellt ist, sind das Steuergerät 5 und die Kabinenluftfederungs-Ventileinheit 4 grundsätzlich entsprechend Fig. 1 ausgebildet. Allerdings besitzt hier das Steuergerät 5 zusätzliche Steueranschlüsse, mittels welchen eine Steuerung einer Dämpfungscharakteristik von Dämpfern 47a, 47b, 47c, 47d durch die Steuereinheit 5 möglich ist. Die Dämpfer 47 bilden hierbei vorzugsweise jeweils eine gemeinsame Baueinheit mit einem zugeordneten Luftfederbalg 7, 9, 11, 12.

Möglich ist, dass die in den Fig. dargestellten Luftfederbälge mit einer einzigen Kammer ausgebildet sind. Ebenfalls möglich ist, dass diese aus mehreren parallel oder in Reihe geschalteten Teil-Luftfederbälgen mit mehreren Kammern bestehen, welche dann wie dargestellt über eine gemeinsame Leitung und zugeordneten Anschluss 6, 8, 10 beaufschlagt werden können.

Die Steuereinheit 5 kann mit Steuerlogik auch für die Erzeugung von Steuersignalen zur Gewährleistung der folgenden Funktionen ausgestattet sein:
- Wird erkannt, dass der Fahrer in die Fahrerkabine einsteigen möchte, insbesondere mit Betätigung der Fahrertür oder eines Fahrertürschlosses oder einer Fernbedienung, kann automatisch eine Entlüftung der Luftfederbälge 7, 9, 11, 12 erfolgen, womit die Fahrerkabine abgesenkt und auf Puffern abgesetzt wird. Hierdurch wird die Einstiegshöhe für den Fahrer verringert, womit das Einsteigen vereinfacht ist. Des Weiteren führt die Bewegung des Fahrers in Querrichtung der Fahrerkabine dazu, dass sich die Fahrerkabine neigt, wenn diese auf gefüllten Luftfederbälgen 7, 9, 11, 12 abgestützt ist. Eine derartige Neigung und ggf. ein Schwanken der Fahrerkabine kann unterbunden oder vermindert werden, wenn die Fahrerkabine mit dem Einsteigen des Fahrers auf den Puffern abgesetzt wird.
- Wenn hingegen erkannt wird, dass ein Fahrbeginn unmittelbar bevorsteht, kann ein Anheben der Fahrerkabine durch Druckbeaufschlagung der Luftfederbälge 7, 9, 11, 12 erfolgen. Der bevorstehende Fahrbeginn kann beispielsweise erkannt werden, wenn ein Fahrersitz-Belegungssensor erfasst, dass der Fahrer sich auf den Fahrersitz gesetzt hat. Ebenfalls möglich ist, dass das Anheben der Fahrerkabine initiiert wird durch Betätigung eines Schalters durch den Fahrer. Schließlich ist, um lediglich ein weiteres Beispiel zu nennen, möglich, dass das Anheben der Fahrerkabine ausgelöst wird durch Betätigung der Zündung des Fahrzeugs.

- In entsprechender alternativer oder kumulativer Weise kann mit dem Einsteigen des Fahrers eine Absenkung des Fahrersitzes erfolgen durch Entlüftung des Luftfederbalgs 42, auf welchem der Fahrersitz 43 abgestützt ist. Hierdurch kann beispielsweise die Beinfreiheit des Fahrers unterhalb eines Lenkrads oder in beengtem Umgebungsbereich der Pedale während des Einstiegs und des Setzens erhöht werden. Hat dann der Fahrer auf dem Fahrersitz 43 Platz genommen, kann die Druckbeaufschlagung des Luftfederbalgs 42 erfolgen. Dies kann ausgelöst werden durch den Fahrersitz-Belegungssensor und/oder die Betätigung eines Schalters, Pedals oder der Zündung durch den Fahrer.
- In umgekehrter Richtung kann eine Entlüftung der Luftfederbälge 7, 9, 11, 12 und/oder des Luftfederbalgs 42 erfolgen, wenn erkannt wird, dass der Fahrbetrieb beendet wird oder ist und/oder der Fahrer die Fahrerkabine verlassen möchte.
- Ebenfalls möglich ist, dass das Absenken der Fahrerkabine und/oder des Fahrersitzes manuell von dem Fahrer ausgelöst wird. Ebenfalls möglich ist, dass zur Verringerung der Fahrhöhe, insbesondere im Bereich von Brücken, mittels manueller Aktivierung durch den Fahrer oder automatische Erkennung einer erforderlichen verringerten Höhe der Fahrerkabine die Steuereinheit 5 die Entlüftung der Luftfederbälge 7, 9, 11, 12 vornimmt.

### BEZUGSZEICHENLISTE

- 1: Druckluftanlage
- 2: Behälter
- 3: Versorgungsanschluss
- 4: Kabinenluftfederungs-Ventileinheit
- 5: Steuereinheit
- 6: Anschluss
- 7: Luftfederbalg
- 8: Anschluss
- 9: Luftfederbalg
- 10: Anschluss
- 11: Luftfederbalg
- 12: Luftfederbalg
- 13: Gehäuse
- 14: Baueinheit
- 15: Entlüftung
- 16: Versorgungsleitung
- 17: Magnetventil
- 18: 3/2-Wege-Magnetventil
- 19: Entlüftungsleitung
- 20: Rückschlagventil
- 21: Zentralleitung
- 22: Steueranschluss
- 23: Verzweigung
- 24: Zweigleitung
- 25: Magnetventil
- 26: Sperrventil
- 27: Steueranschluss
- 28: Steueranschluss
- 29: Steuerleitung
- 30: Sensor
- 31: Signalleitung
- 32: Signalanschluss der Kabinenluftfederungs-Ventileinheit
- 33: Signalanschluss der Steuereinheit
- 34: 3/2-Wege-Magnetventil
- 35: Anschluss
- 36: Anschluss
- 37: Anschluss
- 38: Drossel
- 39: Steueranschluss
- 40: Sensor
- 41: Anschluss
- 42: Luftfederbalg
- 43: Fahrersitz
- 44: Sensor
- 45: Aktor
- 46: Steuereinheit
- 47: Dämpfer
- 48: Magnetventil
- 49: Magnetventil
- 50: Schlüssel

## Patentansprüche

1. Kabinenluftfederungs-Ventileinheit (4) für eine Steuerung der Drücke in Luftfederbälgen (7, 9, 11, 12), welche eine Fahrerkabine gegenüber einem Fahrzeugrahmen bei einem Nutzfahrzeug abstützen, mit elektrisch gesteuerten Magnetventilen (17, 25, 48), mittels welchen eine Be- und Entlüftung von Anschlüssen (6, 8, 10) der Kabinenluftfederungs-Ventileinheit (4) für die Luftfederbälge (7, 9, 11, 12) gesteuert wird.

2. Kabinenluftfederungs-Ventileinheit (4) nach Anspruch 1, **dadurch gekennzeichnet, dass** die elektrisch angesteuerten Magnetventile (17, 25, 48) direkt die Be- und Entlüftung von Anschlüssen (6, 8, 10) der Kabinenluftfederungs-Ventileinheit (4) für die Luftfederbälge (7, 9, 11, 12) herbeiführen.

3. Kabinenluftfederungs-Ventileinheit (4) nach Anspruch 1 oder 2, **dadurch gekennzeichnet, dass** ausschließlich drei Anschlüsse (6, 8, 10) für Luftfederbälge (7, 9, 11, 12) vorhanden sind.

4. Kabinenluftfederungs-Ventileinheit (4) nach Anspruch 1 oder 2, **dadurch gekennzeichnet, dass** vier Anschlüsse (6, 8, 10a, 10b) für Luftfederbälge (7, 9, 11, 12) vorhanden sind, wobei zwei Anschlüsse (10a, 10b) über eine Drossel (38)
a) permanent miteinander verbunden oder
b) in einer Schaltstellung eines Magnetventils (25c; 25d) temporär miteinander verbindbar sind.

5. Kabinenluftfederungs-Ventileinheit (4) nach einem der vorhergehenden Ansprüche, **dadurch gekennzeichnet, dass** ein Magnetventil (17) als 3/2-Wege-Magnetventil (18) ausgebildet ist, über welches die Be- oder Entlüftung mehrerer Anschlüsse (6, 8, 10) für Luftfederbälge (7, 9, 11, 12) erfolgt.

6. Kabinenluftfederungs-Ventileinheit (4) nach Anspruch 5, **dadurch gekennzeichnet, dass** zwischen das 3/2-Wege-Magnetventil (18) und Anschlüssen (6, 8, 10) für Luftfederbälge (7, 9, 11, 12), welche über dieses 3/2-Wege-Magnetventil (18) be- und entlüftet werden, jeweils ein Sperrventil (26a, 26b, 26c) mit einer Durchlassstellung und einer Sperrstellung zwischengeordnet ist.

7. Kabinenluftfederungs-Ventileinheit (4) nach Anspruch 6, **dadurch gekennzeichnet, dass** die Sperrventile (26a, 26b, 26c) unbestromt die Sperrstellung einnehmen.

8. Kabinenluftfederungs-Ventileinheit (4) nach einem der vorhergehenden Ansprüche, **dadurch gekennzeichnet, dass** mindestens ein Magnetventil (48; 48a) vorhanden ist, welches in zumindest einer Schaltstellung zwei Luftfederbälge (7, 9; 11, 12) miteinander unter Zwischenschaltung einer Drossel (38; 38a) verbindet.

9. Kabinenluftfederungs-Ventileinheit (4) nach einem der vorhergehenden Ansprüche, **dadurch gekennzeichnet, dass** ein elektrisch gesteuertes Magnetventil (49) vorhanden ist, mittels welchem eine Be- und/oder Entlüftung eines Anschlusses (41) für einen Luftfederbalg (42) eines Fahrersitzes (43) gesteuert wird.

10. Kabinenluftfederungs-Ventileinheit (4) nach Anspruch 9, **dadurch gekennzeichnet, dass** das elektrisch gesteuerte Magnetventil (49) direkt die Be- und Entlüftung des Anschlusses (42) für den Luftfederbalg (42) des Fahrersitzes (43) herbeiführt.

11. Kabinenluftfederungs-Ventileinheit (4) nach einem der vorhergehenden Ansprüche, **dadurch gekennzeichnet, dass** mindestens ein Sensor (40) vorhanden ist, welcher den Druck an einem Anschluss (6, 8, 10, 41) erfasst.

12. Elektropneumatische Druckluftanlage (1) mit einer Kabinenluftfederungs-Ventileinheit (4) nach einem der Ansprüche 1 bis 11 und einer elektronische Steuereinheit (5) zur Steuerung von Magnetventilen (17, 25, 48), mittels welchen eine Be- und Entlüftung von eine Fahrerkabine abstützenden Luftfederbälgen (6, 8, 10) eines Nutzfahrzeugs erfolgt, wobei die elektronische Steuereinheit (5) mit Steuerlogik ausgestattet ist, welche an mindestens einem Steueranschluss (28) für die Magnetventile (17,25,48) ein Steuersignal zum Be- und Entlüften der Luftfederbälge (7, 9, 11, 12), welche die Fahrerkabine des Nutzfahrzeugs abstützen, erzeugt, und wobei das mindestens eine von der elektronischen Steuereinheit (5) erzeugte Steuersignal den Magnetventilen (17, 25, 48) der Kabinenluftfederungs-Ventileinheit (4) zur Ansteuerung derselben zugeführt wird.

13. Elektropneumatische Druckluftanlage (1) nach Anspruch 12, **dadurch gekennzeichnet, dass**
a) die elektronische Steuereinheit (5) mindestens einen Signalanschluss (33) für das Signal eines Sensors (30, 40, 44), welcher
aa) ein Niveau der Fahrerkabine und/oder des Fahrersitzes (43),
ab) einen Winkel der Fahrerkabine und/oder des Fahrersitzes (43),
ac) eine Auslenkung mindestens eines Luftfederbalgs (7, 9, 11, 12; 42) der Fahrerkabine und/oder des Fahrersitzes (43) und/oder
ad) einen Druck in einem Luftfederbalg (7, 9, 11, 12; 42) der Fahrerkabine und/oder des Fahrersitzes (43)
erfasst, besitzt und
b) die elektronische Steuereinheit (5) mit Steuerlogik ausgestattet, welche das oder mindestens ein Steuersignal zum Be- und Entlüften der Luftfederbälge (7, 9, 11, 12), welche die Fahrerkabine des Nutzfahrzeugs abstützen, in Abhängigkeit von dem Signal an dem mindestens einen Signalanschluss (33) bestimmt.

14. Elektropneumatische Druckluftanlage (1) nach Anspruch 12 oder 13, **dadurch gekennzeichnet, dass** die elektronische Steuereinheit (5) mit Steuerlogik ausgestattet ist, welche an mindestens einem oder dem Steueranschluss (28) ein Steuersignal zum Be- und Entlüften eines Luftfederbalgs (42) eines Fahrersitzes (43) erzeugt.

15. Elektropneumatische Druckluftanlage (1) nach Anspruch 14, **dadurch gekennzeichnet, dass** die elektronische Steuereinheit (5) mit Steuerlogik ausgestattet ist, welche das oder mindestens ein Steuersignal für die Be- und Entlüftung eines Luftfederbalgs (42) eines Fahrersitzes (43) in Abhängigkeit von dem Steuersignal für das Be- und Entlüften der Luftfederbälge (7, 9, 111, 12) der Fahrerkabine ermittelt oder in umgekehrter Abhängigkeit ermittelt.

16. Elektropneumatische Druckluftanlage (1) nach Anspruch 14 oder 15, **dadurch gekennzeichnet, dass** die elektronische Steuereinheit (5) mit Steuerlogik ausgestattet ist, welche
a) bei Erkennung einer besonderen Betriebssituation ein Betriebssituations-Signal erzeugt oder ein externes Betriebssituations-Signal verarbeiten kann und
b) bei Vorliegen des Betriebssituations-Signal in einem für den Fahrer spürbaren Ausmaß eine Be- und/oder Entlüftung mindestens eines Luftfederbalges (7, 9, 11, 12) einer Fahrerkabine und/oder eines Luftfederbalges (42) eines Fahrersitzes (43) herbeiführt.

17. Elektropneumatische Druckluftanlage (1) nach einem der Ansprüche 12 bis 16, **dadurch gekennzeichnet, dass** die elektronische Steuereinheit (5) mit Steuerlogik ausgestattet ist, welche ein Steuersignal für einen Aktor (45) zur Verstellung des Fahrersitzes (43) erzeugt.

18. Elektropneumatische Druckluftanlage (1) nach einem der Ansprüche 12 bis 17, **dadurch gekennzeichnet, dass** die elektronische Steuereinheit (5) mit Steuerlogik ausgestattet ist, welche
a) eine Identifizierung eines Benutzers ermöglicht,
b) mindestens ein Steuersignal für mindestens einen Luftfederbalg (7, 9, 11, 12) einer Fahrerkabine, einen Luftfederbalg (42) eines Fahrersitzes (43) und/oder einen Aktor (43) zur Verstellung des Fahrersitzes (43) erzeugt, welches von der Identifizierung des Benutzers abhängig ist.

19. Elektropneumatische Druckluftanlage (1) nach Anspruch 18, **dadurch gekennzeichnet, dass** die Steuerlogik der elektronischen Steuereinheit (5) geeignet ausgebildet ist, um eine Identifizierung
a) anhand eines Fahrerschlüssels (50),
b) anhand einer Eingabe des Fahrers,
c) anhand eines Mobiltelefons,
d) anhand von Fahrerassistenzsystemen und/oder
e) eines Gewichts des Fahrers
vorzunehmen.

20. Elektropneumatische Druckluftanlage (1) nach einem der Ansprüche 12 bis 19, **dadurch gekennzeichnet, dass** die elektronische Steuereinheit (5) mit Steuerlogik ausgestattet ist, welche ein Steuersignal für mindestens einen die Fahrerkabine abstützenden Dämpfer (47) ermittelt.

21. Elektropneumatische Druckluftanlage (1) nach einem der Ansprüche 12 bis 20, **dadurch gekennzeichnet, dass** der Steuereinheit (5) ein Beschleunigungssignal des Fahrzeugs oder der Fahrerkabine zugeführt wird und die Steuereinheit (5) mit Steuerlogik ausgestattet ist, welche das oder mindestens ein Steuersignal für die Luftfederbälge (7, 9, 11, 12) der Fahrerkabine und/oder den Luftfederbalg (42) des Fahrersitzes (43) in Abhängigkeit von dem Beschleunigungssignal ermittelt.

22. Elektropneumatische Druckluftanlage (1) nach einem der Ansprüche 12 bis 21, **dadurch gekennzeichnet, dass** die elektronische Steuereinheit (5) und die Kabinenluftfederungs-Ventileinheit (4) als
a) eine singuläre Baueinheit (14) oder
b) modulare Baueinheit (14)
ausgebildet sind.
